# EUROPEAN PATENT SPECIFICATION

(11) **EP 1 743 286 B1**
(45) Date of publication and mention of the grant of the patent: **03.03.2010**
(21) Application number: 05718245.3
(22) Date of filing: 22.03.2005
(51) Int. Cl.: G06Q 10/00

(54) **FEATURE EXTRACTION IN A NETWORKED PORTABLE DEVICE**
MERKMALEXTRAKTION IN EINER VERNETZTEN TRAGBAREN EINRICHTUNG
EXTRACTION DE CARACTERISTIQUES DANS UN DISPOSITIF PORTABLE EN RESEAU

(30) Priority: 26.03.2004 US 810924
(43) Date of publication of application: 17.01.2007
(73) Proprietor: Nokia Corporation, 02150 Espoo (FI)
(72) Inventor: KOPRA, Toni, FIN-82330 Espoo (FI); MIKKO, Makipaa, FIN-00830 Helsinki (FI); VAANANEN, Mauri, FIN-33500 Tempere (FI)
(74) Representative: Higgin, Paul
(86) International application number: PCT/IB2005/000743
(87) International publication number: WO 2005/093623

(56) References cited:
- WO-A-02/11123
- WO-A2-03/007128
- US-A- 5 918 223
- US-A1- 2002 187 774
- US-A1- 2002 198 789
- HARTLEY, ZISSERMAN: "Multiple view geometry in computer vision" 2003, CAMBRIDGE UNIVERSITY PRESS

## Description

### FIELD OF THE INVENTION:

The present invention relates to the field of digital media file recognition and mobile appliances. Specifically, the invention broadly relates to at least partial recognition of an audio sample within a mobile station such as a mobile radiotelephone.

### BACKGROUND:

WO 02/11123 discloses the processing of sound to form a finger print. WO 03/007128 discloses an audio capture device that may be linked to a personal computer to transfer audio samples to an internet site for identification.

The owners of popular music have only recently embraced downloading digital copies of their copyrighted works over electronic networks such as the internet. One popular website for doing so is http://www.apple.com/itunes/, wherein users visit the website via a personal computer (PC) or the like, manually select a song title, and download a digital version (e.g., MP3, AAC) of the selected song to the PC they used to visit the website. The user then plays the songs on the PC or transfers them to a portable device such as an iPod® or other dedicated digital music player.

A second generation of music downloading technology has recently been brought to market, wherein the user need not manually select a song by its title on a web page. Instead, the song is 'listened' to by a server or other computer associated with a website, and digitally analyzed to identify that particular song from among a database of digital music. For example, the website http://shazam.com/uk/do/help_faqs_shazam#4 explains its operation as follows. A user hearing a song, such as in a pub or an auto, enters a code in his/her mobile station (MS) while the song is playing. The song is sent to a hosting website such as shazam.com over a standard MS link, just as a voice input would be sent. The hosting website receives the raw music input, analyzes it, and matches it to one of the songs in its database. The Shazam.com technology appears limited to identifying a song at a server using a mobile station as merely a conduit, and reporting the results back to the mobile station.

Most music download services are accessed via a Personal Computer, but also mobile Over-The-Air (OTA) download services have been introduced. Mobile equipment carries limitations regarding small screen size, limited power supply, reliability and speed of data connection, which makes music discovery and delivery of the music from a music service to the mobile terminal challenging. Normally, true music service has a music collection of at least 500 000 songs. Exploring that size of music catalogue is difficult using a mobile device user interface where sequential presentation must fit the content to the screen. This makes hierarchies deep and music discovery difficult.

It is common for people to hear music in a public place, such as a pub or concert hall or car radio. Traditionally, a person becomes interested in some particular piece of music, but does not know the song's title. The person then asks friends, record shop sales staff, or happen to hear the song's name from a radio broadcast to find out the artist and title to identify the song. Some individuals may use the Shazam.com site (above) to identify the song by calling an associated service number and playing the song over their mobile station as a live 'broadcast'. The person then goes to a record store or buys the song from an Internet service based on the identification returned by Shazam.com or similar identifications service. However, there are always the following steps: 1) Hear the music sample (stimulus); 2) Identify the song; 3) Find the song for purchase (based on the identification); 4) Purchase a copy of the song; and 5) Delivery of the purchased copy and adding it to a personal music collection.

Steps 1) through 3) are manual in traditional methods. Internet-based music purchasing automates steps 4) and 5). Services such as Shazam.com automates step 2) based on an electronic 'hearing' at step 1). However, all prior art approaches known to the inventors for performing the above steps involve manual steps by the person who wishes to identify and purchase a copy of the song. The present invention seeks to streamline and automate more of the above process.

Because a greater quantity of digital files are being created and stored, there has arisen a need to standardize the way in which digital files are identified. MPEG-7 is being developed by the Moving Pictures Expert Group (MPEG) to standardize the representation of information about the content of multi-media files, as opposed to the content itself. Whether or not MPEG-7 becomes a standardized approach, it describes a developing set of tools to efficiently index, search, and retrieve multimedia files. Such tools are used herein in an exemplary fashion in the below description of how the present invention automates the identification and purchase of music or other media.

### SUMMARY OF THE INVENTION:

This invention provides a solution in a use scenario, where the user is for example in the café and hears some music that he finds desirable, but does not know the artist and/or the song title. This invention provides a simple way for the end user to identify the song and automatically get an opportunity to buy a copy of that particular song directly to the mobile station. While described primarily with reference to music and audio files, the present invention applies also to text recognition. Various aspects of the present invention are defined in claims 1, 20, 26 and 29.

In one embodiment, the present invention is mobile station MS that includes an interface, such as a transducer, to receive a audio or text sample, a processor to extract at least one feature from a digital version of the received sample, and a transmitter to transmit the at least one extracted feature over a wireless communications link. The transducer is any element that converts an input signal into an output signal of a different form (e.g., microphone, digital camera, photoelectric cell). The received file is digitized within the MS as is known in the art, and the term digitized version is used merely to distinguish over the humanly discernible sample that may be input to the MS transducer. The digitized version may be used to reconstruct the analog sample. Preferably, the MS transmits no part of the digitized version of the sample, but in certain embodiments it may transmit a segment of the digitized version, such as one or more spectral slices associated with a time-dependent feature, along with the extracted feature.

The above interface of the MS need not be a transducer; it may include a cable or wireless (mobile, Bluetooth, optical, radio broadcast) link by which the MS receives the sample. In certain instances, the MS may receive a digital sample input such that the received sample is the digital version of the sample from which features are extracted (though the MS may alter the received digital sample input for more efficient processing in some cases). This may exist when the MS receives the sample input from a separate electronic device (e.g., cable-linked MP3 player, another MS linked via email, etc.) or an integrated device that is functionally separate form the MS (e.g., integrated MP3 player, integrated digital radio). In other cases, the MS receives an analog sample that does not pass through a transducer (e.g., integrated analog FM radio, analog input cable connector) and converts it to the digital version from which features are extracted.

In another embodiment, the present invention includes a computer program embodied on a computer readable medium within a mobile station, to process a audio or text sample. The computer program includes two sets of instructions, parsable by function and not necessarily by space. A first set of computer instructions is to extract at least one feature from a digital sample. A second set of computer instructions is to transmit the at least one extracted feature over a wireless communications link. As with the mobile station, preferably no part of the digital sample is transmitted, but in certain embodiments, a segment of the digital sample may be transmitted along with features already extracted by the first set of computer instructions.

In yet another embodiment, the present invention includes a computer program embodied on a computer readable medium to uniquely match a plurality of extracted features to a feature set stored in a database. This computer program includes three sets of instructions, also parsable by function. A first set of computer instructions is to receive over a network a message that includes received features, such as a message that may be sent by a mobile station operating in accordance with the embodiment immediately above. A second set of computer instructions is to extract additional features from the message. Those additional features may be extracted from the received features (e.g., a higher order extraction not directly from the digital media sample itself), or may be from a segment of the media sample received such as a spectral slice and a feature identifying that slice's relation to other features within the message, or both. A third set of computer instructions is to search a database of feature sets until a plurality of the received features combined with the extracted additional features uniquely matches only one feature set of the database.

These and other aspects and advantages of embodiments of the present invention will become apparent with reference to the following description in conjunction with the accompanying drawings. It is to be understood, however, that the drawings are designed solely for the purposes of illustration and not as a definition of the limits of the invention.

### BRIEF DESCRIPTION OF THE DRAWINGS:

Figure 1 is a schematic overview of a communication system within which the present invention may operate.

Figures 2A-2B are block diagrams representing feature extraction of a media sample distributed among a mobile station and a server, respectively.

Figures 3A-3D are portions of a continuous flow diagram detailing actions taken in the communications system of Figure 1. Figure 3A represents steps within a mobile station, Figure 3B represents steps within a server, Figure 3C represents steps within a server that provides downloads of media files for purchase, and Figure 3D represents further steps in the mobile station in response to the server.

Figure 4 is a block diagram schematic of a mobile station particularly adapted according to the teachings of this invention.

Figure 5 is a schematic timing diagram illustrating the advantage in continuously buffering input at the mobile station.

### DETAILED DESCRIPTION:

Although the following description contains references to media samples other than sound or text, the invention, as claimed, is limited to the processing of sound or text samples only.

An explanation of terminology used herein will enlighten the below detailed explanation. A media sample is a portion, of any size, of an audio, visual, or audio/visual signal on which analysis is performed. In some instances as where the media sample is received via a microphone or camera, the media sample is humanly discernable. The below description is in the context of a time-bounded portion of a song, for example, a continuous or coherent ten-second segment of a three-minute song commonly played over a conventional FM radio. A feature of that sample, or preferably of a digital version of that sample, is a digital marker, descriptor, or other identifier of the content of the sample that may be gleaned or extracted from a digital analysis of it. A timepoint is a chronological instant within the sample. Features are often associated with timepoints. For example, a maximum amplitude in a sample occurs at only one timepoint; a repeated frequency pattern may begin at timepoints spaced at equal intervals; a characteristic percussion sequence may occur only at a fixed time offset from the end of an identifiable bass sequence. A more detailed description of features is presented below. Features are extracted from samples in order to quantify various characteristics of the sample. In the example of music, features of a song sample are extracted in order to search a database of songs and identify the sampled song's title (or version, artist, etc.) from among many thousands or even millions. Where the database includes features that have been previously extracted from the entire song, a one-to-one comparison may be made between the features extracted from the current sample and the previously extracted features. In this manner, a song can be identified by only a comparatively small sample of the whole. While features may be extracted from a media sample or a digital version of that sample, additional features may be extracted from the already extracted features. For example, a first set of features extracted from a media sample or a digital version of that sample will exhibit a certain autocorrelation among themselves. That autocorrelation is determined by an analysis of only the first set of extracted features.

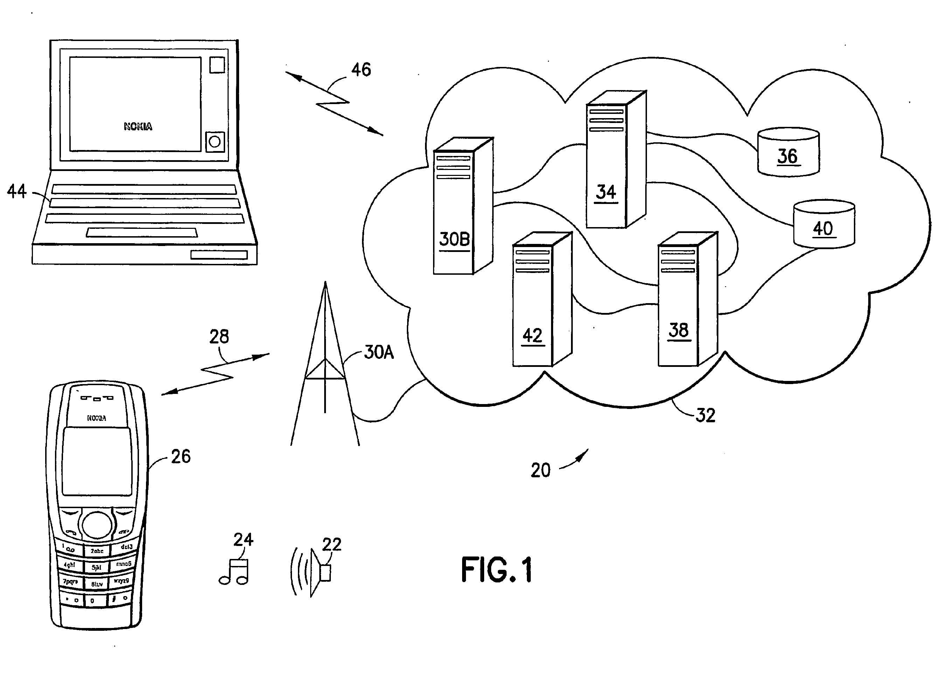

A communication system 20 in which the present invention operates is illustrated at Figure 1. A media source 22 such as a FM radio provides a media sample 24 such as a portion of a song. A mobile station MS 26 or similar such portable device with wireless communication capability, especially wireless telephony capability, receives the media sample 24 for digitizing, processing and transmittal. Though the MS 26 may receive the entire song, the media sample or its digitized version is the portion on which the MS 26 operates according to the present invention. The MS 26 creates a digital version of at least some of the media sample 24, extracts one or more features from it, and transmits those features over a wireless link 28 to a communication service 30 that includes a base station 30A in communication with a communications server 30B.

The communication service 30 receives calls from the MS 26 at the base station 30A, keeps track of them and redirects the transmission from the MS 26 to a commercial song recognition service 34. The communication service may or may not alter the exact signal received from the MS 26 (such as to decode, decompress, identify and correct errors and the like), depending upon the type of communication regimen in use, but does not alter the underlying substantive data, the features being transmitted. In addition, the communication service 30 carries out composing a short response message for the MS 26 to receive, as detailed below.

The song recognition service 34 receives the MS 26 transmission through the communication service 30. That transmission preferably includes features of the media sample 24 that are further analyzed at the song recognition service 34. Alternatively, the MS-extracted features are transmitted with another segment of the sample, from which the recognition service 34 extracts additional features. As processing power and battery efficiency in MS's increase, the transmission from the MS 26 may include a set of features comprehensive enough that no further feature extraction by the recognition service 34 is required. In no instance is the transmission merely a telephonic live feed of the entire media sample 34 through the MS 26. Regardless, the song recognition service 34 receives the transmission, may extract further relevant features from the message received from the MS 26, and combines them with the MS-extracted features received in that message.

A song signature database 36, which may or may not be one with the song recognition service 34, provides a database against which the full set of features extracted from the media sample 34 (by both the MS 26 and the recognition service 34) are compared. This database preferably stores, for each of numerous files, a plurality of features extracted from an underlying media file or sample thereof. These stored feature sets may be used to uniquely identify the underlying file from which the media sample 24 is drawn from among all others in the signature database 36. Alternatively, the signature database 36 may store, for each file or song, several extracted non-unique features and a reference sample (the combination of which uniquely identifies the underlying file or song), or any other means by which to uniquely identify one song or file in the database from other songs or files.

The song recognition service 34 compares the original sample with stored samples in the song signature database 36, and seeks to find only one match for the features transmitted by the MS 26 in the song signature database 36. Where the MS 26 and the recognition service 34 each extract features, the song recognition service 34 performs two separate functions: search the database using the extracted features, and extracting further features from the transmitted portion of the media sample. Preferably, the recognition service 34 performs these two functions in parallel. When the song recognition service 34 initially searches the signature database 36 using only the features previously extracted by the MS 26, a unique song may not be identified but the potential matches in the signature database 36 will be reduced to a substantially smaller subset, depending upon the number of features used in that initial search. Simultaneously, the recognition service 34 extracts additional features from that portion of the media sample 24 sent by the MS 26. As each additional feature is extracted, the subset of potential matches is reduced until only one unique match is found. At that point, the recognition service 34 terminates further feature extraction, and the total processing required for to match the media sample 24 to a media file in the signature database 36 is minimized.

Alternatively, the recognition service 34 may instead first extract additional features from the message transmitted by the MS 26, compile the extracted features with those received from the MS 26, and execute only one search of the entire signature database 36 to find a unique match. The choice is based on a market-driven balance of responsiveness to the user (time to search the database) and available processing power at the recognition service to extract additional features from numerous simultaneous messages from many MS's.

Once a unique match is found, the recognition service 34 sends a sample identification message (which may also be a not identified message where no match is found) to the MS 26 through the communication service 30. The MS 26 displays the song title and artist on a display user interface UI to inform the user of the name of the song or other media file.

Preferably, the present invention is extended beyond merely identifying the song or media file but to automatically provide a link by which a user can purchase a copy of that identified media file that is downloaded to the customer at the MS 26. Alternatively, it may be adapted to provide a first copy to the MS 26 and a second copy to another device such as a personal computer 44, where each copy is tailored to the type of link 28, 46 available on the download. This is advantageous in that the first copy may be the identified media file compressed with a codec that optimizes for the more limited storage and sound reproduction capability at the MS 28 (as well as bandwidth considerations), and the second copy of that same underlying media file may be compressed with a second codec that optimizes for the greater bandwidth available in a link 46 to the PC 44. The customer may then upload the second copy to a dedicated portable digital music device such as a Rio® or iPod® for high fidelity portable music. The details of such a two-copy download alternative are the subject of co-owned U.S. Patent Publication No. US 2005197964, filed on March 2, 2004.

Providing a copy of the identified media file to the user requires the cooperation of a file or song storage database 40 that stores the actual files or songs to be downloaded. Where the signature database 36 stores features and file/song identification (such as title/author that may be sent to the MS 26 after a match is found), the file/song storage database 40 stores the actual files/songs that correspond to the features matched in the signature database 36. The two databases 36, 40 may be combined into one though they need not be; the identification from the signature database 36 may be used to readily select a unique file/song from a separate file/song database 40. The file/song from the latter database 40 is the one that is downloaded to the user when the present invention is extended as above to provide a copy of the song as well as its identification to the user of the MS 26, preferably after file compression.

When a song is to be so downloaded, preferably a music service 38, that is coupled to the song database 40 in the network 32, receives a request from the MS 26 and responds with the requested file (song, image, text etc.) and metadata for presenting the file in a described form (styles, templates, scripts etc.). The music service 38 queries data from the song storage database 40. Since the MS 26 is coupled to the network 32 through the communications service 30, the file passes through it enroute to the MS 26.

A download service 42 may also be included to manage all individual download transactions initiated from the MS 26 through the music service 38. The download service 42 tracks each download of files from the storage database 40 to track billing and comply with copyright restrictions. The invention contemplates an end-to-end transaction that is automatically executed upon a single entry at a user interface UI of the MS 26, such as a single depression of a button or soft key. In this end-to-end embodiment, that single entry initiates capture of the media sample, feature extraction and call establishment in the MS 26, and transmission of the extracted features and a portion of the media sample from the MS 26. A song is identified by the extracted features (some extracted by the MS 26, some extracted by the recognition service 34) using the signature database 36, and either the music service 38 or the recognition service 34 sends a message to the MS 26 that identifies the song (e.g., title and artist) to the MS user.

The message also provides a link to the music service 38 so that, with preferably one more single entry at the MS 26, the user can request to download the song to the MS 26. The music service stores the song identifier (which may or may not be the title/artist, as this will be used to digitally select a song from the song database 40), or transfers it to the download service 42 that then stores it. When the MS 26 requests download of the song, the music service 38 selects the matched song from the song database 40, informs the download service 42 which arranges billing to the user of the MS 26 through the communication service server 30B, and the music service 38 provides the identified song from the song database 40 to be downloaded to the MS 26. The user may access the music service 38 directly from the MS 26 using the link provided in the identification message, or may use the link from the PC 44 to obtain a higher fidelity version (different compression codec) of the song since it will be downloaded via a broadband or other PC link 46 that, in current practice, is generally not as constrained in bandwidth as the wireless mobile telephony link 28.

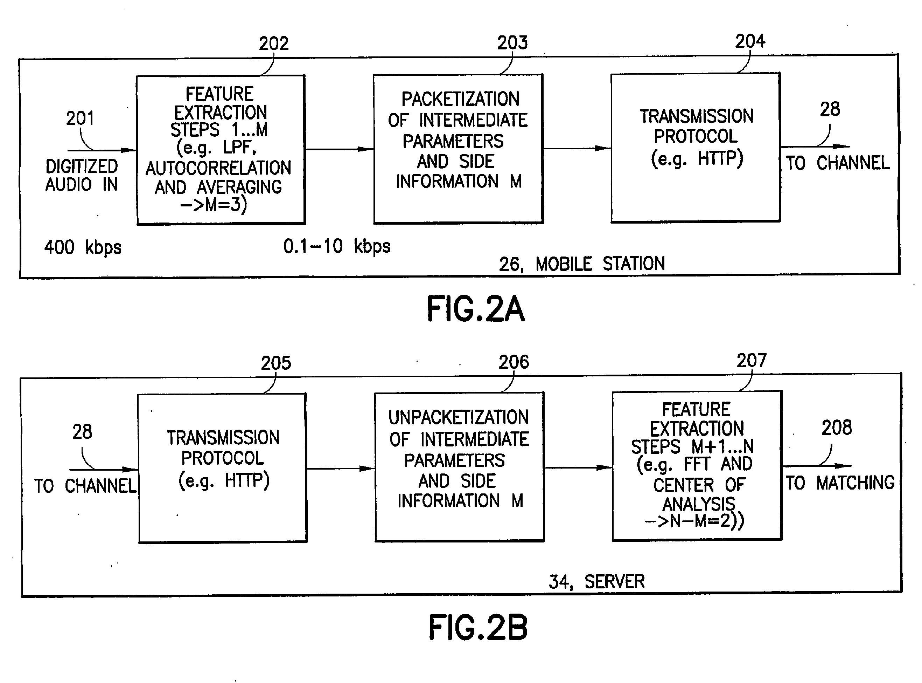

Figures 2A and 2B broadly describe the analysis of the media sample among distributed components of the communications system 20. Figure 2A illustrates in block diagram operations within the mobile station 26. The media sample 24 is digitized 201 as any other input to the MS 26, and the MS 26 establishes a data connection (e.g., via a wireless link 28 and a network 32) to the server such as one operated by the song recognition service 34. The MS 26 begins preprocessing 202 the digitized audio input signal 201 and extracts features from it, which will be later sent as data packets to the server. Optionally the MS 26 has been buffering the audio input continuously so that the preprocessing 202 can start on a signal that was input at a time preceding the push of a recognition key or other user entry to initiate the process. In most cases the user has already been listening to the song for some time before pushing the recognition key.

The features used for the recognition can be e.g. spectral flatness, spectral centroid, rhythm and/or melody. Features describe the content of the media file or sample, and are not merely digital reformulations of the (analog) media sample 24 that is input into the MS 26. Though the MS 26 digitizes the input media sample 24, that alone is not feature extraction. Preferably, features are non-reconstructive. That is, the original media sample cannot be reconstructed merely by re-processing or otherwise manipulating features extracted from it. Non-reconstructive features describe the content of the media file, but cannot recreate that content. Not all features need be non-reconstructive, but extracting non-reconstructive features at the MS 26 yields a smaller packetized message to send over a wireless link than reconstructive features in most if not all instances.

Suitable features have been described e.g. in the MPEG-7 standard (ISO/IEC 15938, especially ISO/IEC 15938-4, INFORMATION TECHNOLOGY - MULTIMEDIA CONTENT DESCRIPTION INTERFACE- PART 4: AUDIO for the audio-related embodiments herein), herein incorporated by reference. Literature relating to MPEG-7 uses the term descriptors to represent features that are extracted directly from a media sample, such as may be performed by the MS 26 according to the present invention. MPEG-7 literature uses the term description scheme DS or description tools to describe features extracted from descriptors. Where descriptors are low-level analysis of a digital version of a media sample, description schemes are high-level analysis (e.g., drawn from an interrelationship between descriptors but not from the sample directly). MPEG-7 is currently under refinement, so the following is a summary of certain descriptors and description schemes currently contemplated for that standard and relevant to the present invention.

Descriptors are the representations of low-level features, the fundamental qualities of audiovisual content, such as statistical models of signal amplitude, fundamental frequency of a signal, an estimate of the number of sources present in a signal, spectral tilt, emotional content, an explicit sound-effect model, and any number of concrete or abstract features. In the preferred embodiment of the invention, the MS 26 extracts descriptors.

Description Schemes are structured combinations of Descriptors. This structure may be used to annotate a document, to directly express the structure of a document, or to create combinations of features which form a richer expression of a higher-level concept. For example, a classical music DS may encode the musical structures (and allow for exceptions) of a Sonata form. Various spectral and temporal Descriptors may be combined to form a DS appropriate for describing timbre or short sound effects. In the preferred embodiment of the invention, a server on the network 32 extracts the description schemes.

A descriptor may be considered to define the syntax and the semantics of one representation of a particular characteristic of the content of a media sample. For example, the color of an image file is a characteristic. A feature may be a descriptor or a characteristic, where descriptor is the more basic of the two and a particular characteristic may be only fully described by several descriptors. Possible descriptors associated with the characteristic 'color' include: color histogram, red-green-blue (RGB) vector or a string. The MS 26 may extract a value for a particular descriptor, an instantiation of a descriptor for a given value set. For example, RGB=(255, 255, 255), colorstring="red". Certain descriptors are relevant or valid with one type of media file but not another. For example, descriptors for a visual media sample may include: grid layout and histogram within a basic structure characteristic; color space, dominant color, color histogram and color quantization within a color characteristic; spatial image density distribution and homogeneous texture within a texture characteristic; object bounding box, region-based shape, contour-based shape and 3D shape descriptor within a shape characteristic; and camera motion, object motion trajectory, parametric object motion, motion activity and motion trajectory aspects (e.g., speed, direction, acceleration) within a motion characteristic. Descriptors relevant to an audio sample may include: lattice of words and phonemes plus metadata in a speech annotation characteristic; ratio of even to odd harmonics and harmonic attack coherence in a timbre feature; and melodic contour and rhythm within a melody characteristic.

Currently, there are seventeen temporal and spatial descriptors in MPEG-7 for describing audio samples: basic, basic spectral, signal parameters, timbral temporal, timbral spectral, and spectral basis. Additionally, a silence descriptor has proven valuable in identifying the content of an audio sample. The two basic audio Descriptors are temporally sampled scalar values for general use, applicable to all kinds of audio samples. A waveform Descriptor describes the audio waveform envelope (minimum and maximum), typically for display purposes. A power Descriptor describes the temporally smoothed instantaneous power, which is useful as a quick summary of a signal or sample, and in conjunction with the power spectrum.

The four basic spectral audio Descriptors all share a common basis, all deriving from a single time-frequency analysis of an audio signal or sample. They are all informed by the first Descriptor, an AudioSpectrumEnvelope Descriptor, which is a logarithmic-frequency spectrum, spaced by a power-of-two divisor or multiple of an octave. This AudioSpectnimEnvelope is a vector that describes the short-term power spectrum of an audio sample. It may be used to display a spectrogram, to synthesize a crude "auralization" of the data, or as a general-purpose descriptor for search and comparison. Other spectral audio Descriptors represent the center of gravity of the log-frequency power spectrum (centroid or shape), spectrum spread about the centroid, and spectrum flatness for each of a number of frequency bands or bins.

Two signal parameter Descriptors apply chiefly to periodic or quasi-periodic signals. These describe the fundamental frequency of an audio sample (a confidence measure) and its harmonicity (to distinguish, e.g., musical tones or voiced speech, metallic or bell-like sounds, fricatives like 'f', or dense mixtures of instruments).

Two timbral temporal Descriptors describe temporal characteristics of segments of sounds, and are especially useful for the description of musical timbre, the characteristic tone quality independent of pitch and loudness. One such descriptor characterizes the "attack" of a sound (the time it takes for the signal to rise from silence to the maximum amplitude), and another characterizes the signal envelope or centroid, representing where in time the energy of a signal is focused. The latter Descriptor may, for example, distinguish between a decaying piano note and a sustained organ note, when the lengths and the attacks of the two notes are identical.

Five timbral spectral Descriptors are spectral features in a linear-frequency space especially applicable to the perception of musical timbre. One is a power-weighted average of the frequency of the bins in the linear power spectrum, and is similar to the centroid descriptor noted above, but distinguishes the "sharpness" of a sound for different musical instruments. The remaining timbral spectral Descriptors operate on the harmonic regularly-spaced components of signals or samples. For this reason, the descriptors are computed in linear-frequency space, and include spectral centroid, spectral deviation, and spectral spread descriptors.

Two spectral basis Descriptors represent low-dimensional projections of a high-dimensional spectral space to aid compactness and recognition. One such Descriptor is a series of (potentially time-varying and/or statistically independent) basis functions that are derived from the singular value decomposition of a normalized power spectrum. Another represents (when combined with the first) low-dimensional features of a spectrum after projection upon a reduced rank basis. The silence segment simply attaches the simple semantic of "silence" (i.e. no significant sound) to an Audio Segment. Although it is extremely simple, it is a very effective descriptor. It may be used to aid further segmentation of the audio stream, or as a hint not to process a segment.

Together, the descriptors may be used to view and to represent compactly the independent subspaces of a spectrogram. Often these independent subspaces (or groups thereof) correlate strongly with different sound sources. Thus one gets more salience and structure out of a spectrogram while using less space.

The Description Schemes DSs reflect interrelationships between descriptors, or among the same type of Descriptors over several frequency bins or spectral slices. In that manner, DSs exchange some degree of generality for descriptive richness. Once a sufficient number of Descriptors are extracted from a sample or a segment of that sample at the MS 26, there is no need to transmit the digitized audio sample; the recognition service 34 needs only the extracted features from which to extract additional features. These additional features are, in certain embodiments of the invention, akin to the DSs of MPEG7. For example, an audio signature DS statistically summarizes the spectral flatness Descriptor. This can provide a unique content identifier for the purpose of robust automatic identification of audio samples.

Timbre DSs aim at describing perceptual features of instrument sounds. Timbre is the perceptual features that make two sounds having the same pitch and loudness sound different. Timbre DSs describe these perceptual features with a reduced set of Descriptors, which may relate to notions such as "attack", "brightness" or "richness" of a sound, to harmonic, coherent, sustained sounds, and non-sustained sounds for a particular instrument or instrument group (percussion), and the like. Another timbre DS compares a timbral temporal Descriptor with a spectral centroid Descriptor using a distance metric.

Melody DSs include a rich representation for monophonic melodic information to facilitate efficient, robust, and expressive melodic similarity matching, and includes a melody contour DS (a 5-step contour representing the interval difference between adjacent notes where intervals are quantized into large or small intervals, up, down, or the same) for extremely terse, efficient melody contour representation, and a melody sequence DS (an expanded descriptor set and higher precision pitch interval encoding) for a more verbose, complete, expressive melody representation. Either or both may be expanded to include supporting information about the melody. Arrayed about these core Descriptors are a series of optional support Descriptors such as lyrics, key, meter, and starting note, to be used as desired by an application.

Some "recognition" DSs are specifically to aid in searching and indexing the underlying media files, and use the low-level spectral basis Descriptors as their foundation from which is formed a statistical model, such as a hidden Markov or Gaussian mixture model. The resulting probabilistic classifiers may recognize broad sounds classes, such as speech and music, or they can be trained to identify narrower categories such as male, female, trumpet, or violin. Other applications include genre classification and voice recognition. Further DSs detail spoken content within an audio stream.

Further details as to features that may be extracted may be found at U.S. Patent Publication No. US 2002/0083060 A1, published on June 27, 2002. The amount of preprocessing 202 in the MS 26 can range to complete extraction of feature vectors. The whole feature extraction process for each feature is preferably divided into several stages, some of which reduce the amount of data later sent as compared to a non-extracted signal (e.g., the 'live' music sample 24 received at the MS 26). For example, the first stage for a spectral feature can be estimation of the autocorrelation of the digitized input signal 201 by calculating instantaneous autocorrelation vectors and averaging them over a period of time. The next stages then can perform a Fourier transform and process that further. The whole feature extraction process is divided between the MS 26 and the server 34. The MS 26 selects the number of stages it performs, and packetizes 203 the number M of stages performed as side information, along with the results of the preprocessing (the MS-extracted features). Preferably, the MS 26 adaptively selects the number and/or type of features it extracts, which may be based on the type of media sample (audio, video, still image, etc.) and/or the channel characteristics over which it will transmit those extracted features. A segment of the media sample 24 from which no features have been extracted by the MS 26 may also be transmitted from the MS 26 as above for further analysis at the recognition service 34, as above. Packets are encoded 204 in accordance with a typical wireless protocol (constellation mapping, error correction, etc.). A suitable balance between the processing power and transmission bandwidth is selected based on the access network 32 and capabilities of the MS 26. The encoded packets are transmitted over the wireless link 28 via one or more channels.

As shown in Figure 2B, the packets are received and decoded 205. Decoding specific to the wireless link 28 may be done by the communication server 30B and opening 206 of the individual packets may be done by the song recognition service 34 in an end-to-end voice-over internet protocol arrangement. The server of the song recognition service 34 then extracts further parameters 207 required for identification of the song, which can be extracted from the features received from the MS 26 and/or from a segment of the digitized media sample also received from the MS 26. In the example of Figures 2A-2B, a total of N>M features are extracted to enable a positive identification of the media sample. A number of M features are extracted by the MS 26, and the remaining N-M features are extracted by the server 34, where M preferably represents lower level features and N-M represents higher level features that are extracted from the lower level features and not from a digitized version of the media sample. The song recognition service server 34 then makes a comparison 208 between the extracted features and feature sets, each representing an underlying media file, stored at the song signature database 36. Ideally, one and only one feature set in the database will match the group of extracted features, and the feature set that so matches represents the file from which the media sample was taken. Based on extracted features, the media sample 24 is recognized by a comparison of its N extracted features against the feature vectors or feature set for the underlying file provided by the song signature database 36.

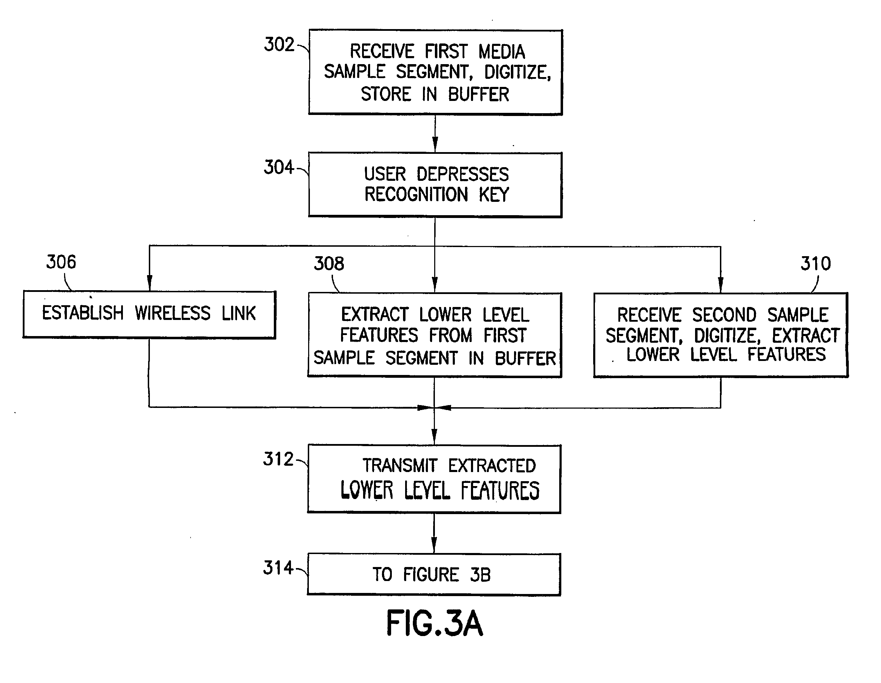

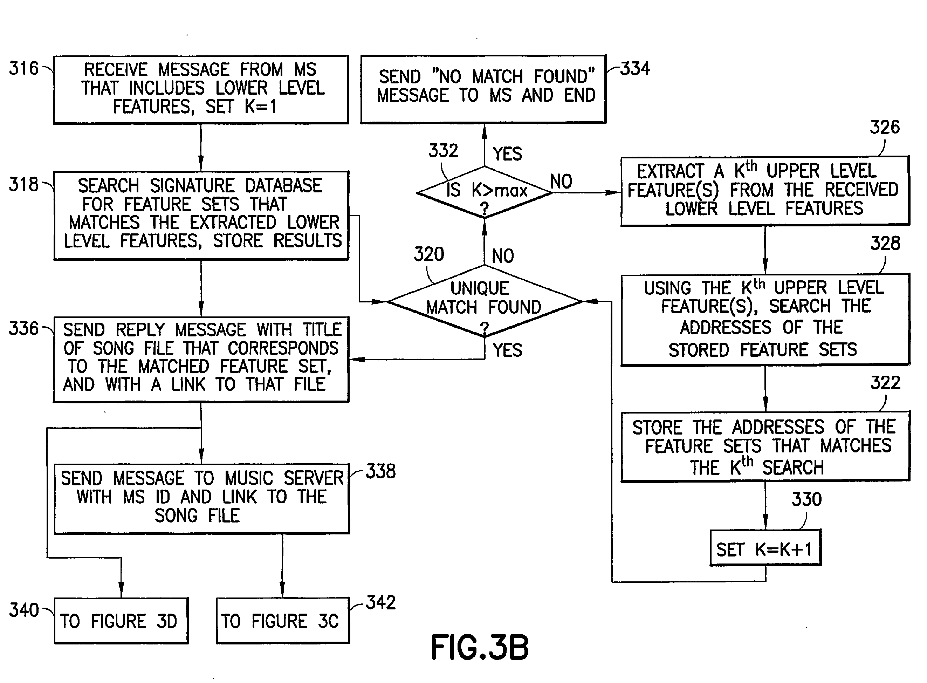

Figures 3A-3D illustrate in flow diagram form the various steps or the preferred embodiment of the method according to the present invention, each flow diagram linked to another as indicated. Figure 3A describes the method within a MS 26 as the media sample 24 is initially received and processed. In this embodiment, the media sample is parsed into two segments, one of which is stored in a buffer of the MS 26 and the other of which is processed in real time as received at the MS 26. A first media sample segment is received 302 at the MS 26, digitized, and stored in a buffer. This storing is continuous as no user input yet informs the MS 26 that it should perform an analysis or otherwise process the input in accordance with the teachings herein. A user depresses a recognition key 304, triggering the MS 26 to perform three functions preferably simultaneously: the MS 26 establishes 306 a wireless link 28 to a base station 30A, it extracts 308 lower level features from the buffered first segment of the media sample 24, and it receives 310 a second segment of the media sample, digitizes it, and extracts lower level features from it. The second segment may be transiently stored. The MS 26 then transmits 312 the extracted features (and the number of steps performed by the MS 26 in extracting a particular feature if applicable, as noted above) over the wireless link 28 established at step 306. Alternatively, features are extracted from the first segment, possibly also the second segment, and the extracted features are transmitted along with the second segment, which may only be a spectral slice or a series of spectral slices of the digitized media sample. The method is continued 314 at Figure 3B.

Figure 3B details steps at the network 32 side of the system 20. The server 34 receives 316 a message from the MS 26 that was transmitted at step 312 of Figure 3A. A communication server 30B may decode the wireless specific portion of the packetized message, and preferably merely re-transmit over the network 32 the unopened packets carrying the substantive data. The song recognition service 34 opens the packets, receives the already extracted lower level features, and searches 318 the signature database 36 for a file bearing a feature set that matches those lower level received from the MS 26 for a unique match 320. The results of that search are stored temporarily. If no unique match is found using only the MS-extracted features, an index K (initialized at block 316) is compared against a maximum, and if not exceeded, one or more upper level features are extracted from the received lower level features at block 326. At block 328, the those feature sets from the database that matched the MS-extracted features (and stored temporarily at block 318) are searched using the K^{th} server-extracted feature, so that the entire database 36 need not be searched again in the current search iteration. The results of that K^{th} search are stored temporarily at block 322, K is indexed one at block 330, and if a unique match is not found 320 again, the loop continues for ever more extracted features until K exceeds a maximum, wherein a "no Match Found" message is sent 334 to the MS. Once a unique match is found at block 320, a reply message 336 is sent to the MS 26 carrying the title (or other identification) of the song or file that corresponds uniquely to the database feature set that matches the extracted features. The reply message 336 also preferably carries a link directly to the matched file, which is at the song or file storage database 40 that may or may not be one with the signature database 36.

A communication link between the MS 26 and the song recognition service 34 preferably remains open between the time the MS 26 first transmits its extracted features and the time the recognition service 34 transmits its reply message 336 with the unique file identifier. In one embodiment, the MS 26 sends a first message with a first set of extracted features, and the recognition service 34 searches its database (either with or without extracting additional features). In the event no unique match is found, the recognition service 34 may send a request message to the MS 26, which may specify number and/or type of additional features it requests the MS 26 to extract (which the MS 26 may do from the digital version of the media sample stored in the buffer). For example, assume the recognition service 34 returns four matching results from the database. The recognition service is then able to determine one or more particular features by which the four might be uniquely distinguished, be it a lower level feature such as signal envelope or centroid, or a higher-level feature such as a timbral temporal distance between timbral temporal centroids. In the former, the recognition service 34 might specifically request the centroid feature for a particular spectral slice that would directly distinguish among the four; in the latter, it may request a missing timbral temporal centroid so that the recognition service may then extract the additional feature (e.g., a distance between centroids) that will distinguish between the four. The MS 26 sends another message with a second set of features extracted in that second extraction, and the recognition service 34 again searches the database. This second search of the database may use the second set of extracted features, may use a second set of additional features extracted from the second set, or a combination. In this manner, a 'dialogue' may continue between the MS 26 and the recognition service 34, with the latter calling for additional features each time a database search fails to return a unique match. Preferably, the communication link between them remains open; a packet switched network need not consume appreciable bandwidth during the times the recognition service searches the database since packets are not being transmitted.

Preferably, the song or file identification and the corresponding music service URI is returned to the communication service 30A-B, which composes the reply message to the MS 26 and sends it as an SMS/MMS or similar message to the MS 26. The recognition service server 34 also sends a message 338 to a music server 38 (where the music server is separate from the recognition service server) with the unique identifier of the MS 26 and the link to the matched file.

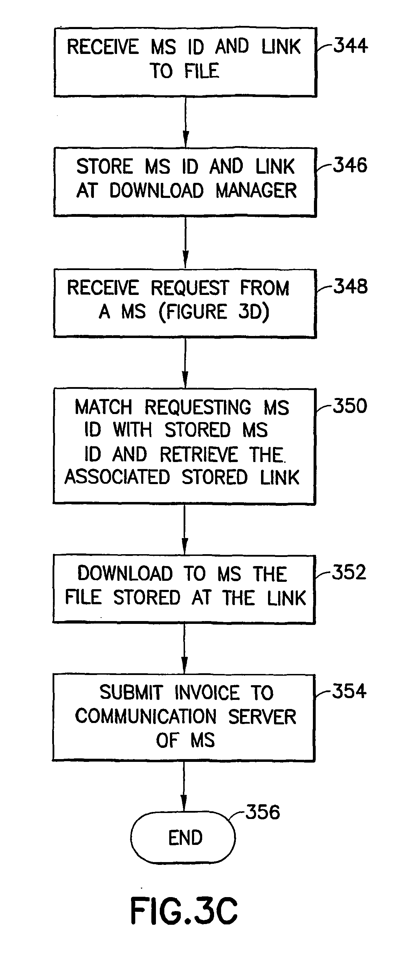

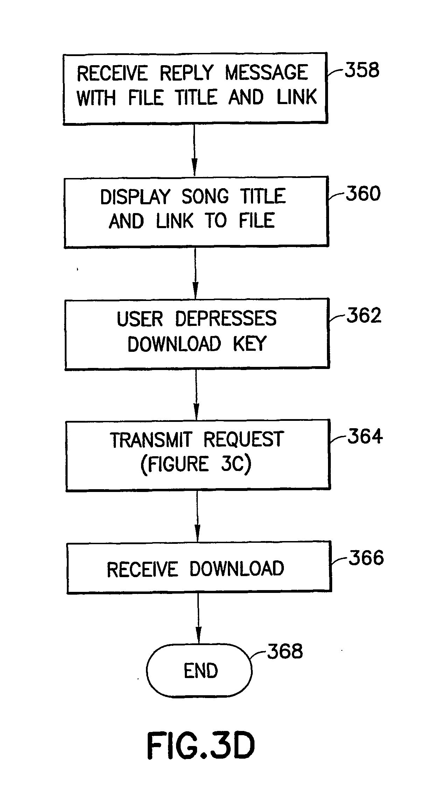

Block 342 leads to Figure 3C, the music server 38. The music server 38 receives 344 the message from block 338 of Figure 3B and stores 346 that information at a download manager 346, as the MS 26 may not immediately request a download of the matched file or song. Once the music server 38 receives a request from the MS 26 (see Figure 3D), preferably soon after the MS 26 receives its reply message 336 from the recognition service server 34, it matches 350 the unique identifier of the MS 26 to the MS ID stored in the download manager 346 and retrieves the associated link to the matched file. Payment information is conformed (preferably retained on file and matched to the MS ID following a first purchase from that MS 26) and the matched file or song is downloaded 352 to the MS 26. An invoice of the purchase is submitted 354 to the communication server 30B of that MS 26, and the process ends 356 for the network side of the method.

Block 340 of Figure 3B leads to Figure 3D which is further from the MS 26 perspective. The MS 26 receives 358 the reply message and link from block 336 (of Figure 3B) and displays 360 the song or file title or other identifier, along with the link to it. The user depresses 362 a download key, possibly after selecting the link where the user has stored several that may be displayed simultaneously, which transmits 364 a request for the file or song noted at block 348 of Figure 3C and which also constitutes authorization to debit or credit an account previously disclosed. The user receives 366 the downloaded file or song at the MS 26, and the method ends 368 for the MS 26 side of the transaction.

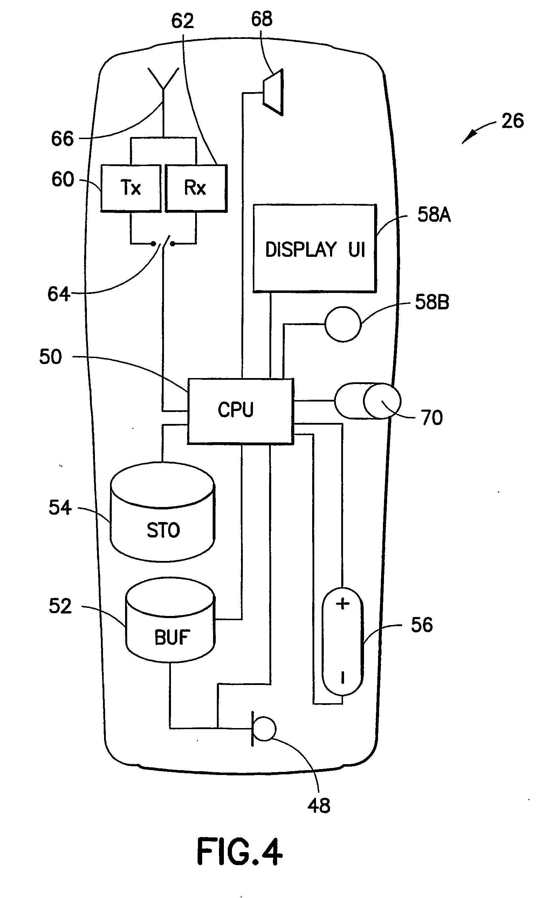

Specific components of the MS 26 will be detailed with reference to Figure 4. A first transducer or microphone 48 for receiving an audio input (the media sample 24 previously noted) is coupled to a processor 50 which digitizes the sample and begins extracting features, which are stored in a computer readable main storage 54. The particular algorithms used for feature extraction may be stored in the storage 54 as computer readable instructions, and the main storage 54 need not be a single coherent storage medium but may be distributed among several different storage components. The media sample may pass through a buffer storage 52 that continuously stores a finite data volume of the sample prior to it being processed. The buffer storage 52 continuously stores the signals most recently received at the microphone 48 so that, when a media sample is to have features extracted at a user command, the processor 50 can immediately begin extracting features from that portion of the media sample currently within the buffer memory 52. In this manner, features may be extracted from a portion or segment of the sample that precedes in time the user command to identify the song or file. Because no additional processing is done to the signal stored in the buffer memory until and unless a user command requires it, minimal additional power is consumed.

The processor 50, and all components of the MS 26, is powered by a portable power source such as a rechargeable battery 56 or replaceable fuel cell. A user interface 58 includes a display interface 58A to convert an output from the processor to text messages and images discernible to a user, and an input mechanism such as a button 58B by which a user may input commands/requests to the processor 50. The processor 50 is coupled to a transmitter 60 and receiver 62 through a switch 64 so that transmissions and receptions cannot occur simultaneously. Each of the transmitter 60 and receiver 62 are coupled to an antenna 66, which may be internal or external of a housing that envelops the processor 50. The processor may also provide outputs to a user at a second transducer or speaker 68. For video reception, the MS 26 may include a camera 70 or other image-capturing device to provide a visual media sample to the processor 50. Though not shown, the camera 70 may also provide an input to a video buffer memory (not shown) that operates similar to the buffer memory 52 associated with the microphone 48.

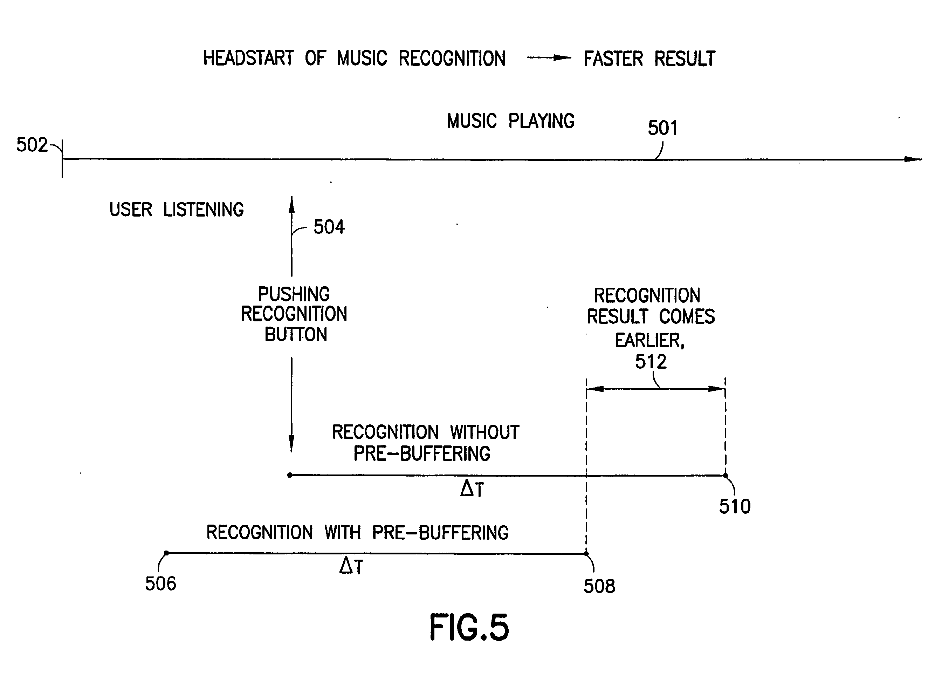

Figure 5 is a timing diagram depicting the advantage gained in buffering inputs at the MS 26. A media sample 501 is received at the MS 26 beginning at a start 502. A user listens beginning at that start 502, and after determining that it is a song or file for which he/she would like a copy, the user depresses a recognition button at a request time 504. Assume a minimum (time-bounded) media sample ΔT is required for the MS 26 to perform its preprocessing. This is not the processing time, but rather the amount of the song (e.g., ten seconds) necessary to extract sufficient features by which to identify the entire song or file. Where a buffer 52 is employed, ΔT begins at a time 506 preceding the user request time 504 and extends the requisite minimum sample time to a buffered sample end time 508. Where no buffer is employed, the earliest time at which the media sample can be captured is at the request time 504. The requisite minimum sample time then must end 510 at a time later than the buffered sample end time 508. Depending upon the amount of time it takes the MS 26 to process the buffered segment of the media sample 24, the difference 512 between the two end times 508, 510 may be as much as the difference in media sample start times 506, 504. Because the MS 26 preferably maintains a continuous wireless link 28 from its transmission of the preprocessed features and receiving the reply message, this difference 512 can only enhance the user's experience by reducing delays.

In summary, the present invention as adapted to a music file includes a seamless music recognition and purchasing system and method, which implements a seamless usage chain that covers all the steps from hearing interesting music to buying that particular piece of music over the air. There is novel functionality where song recognition lays on a single button of the MS 26. Pressing the button causes the MS to extract and transmit one or more features from the sample, and in response, ultimately receive a message that not only identifies the underlying song from which the media sample is taken but also provides a direct link to the track in the music service. Pressing the link takes the user to the music service where the particular piece of art can be purchased and downloaded immediately over the air. The feature extraction part of the music recognition process is divided between the MS and the server so that the MS can perform the first stages and thereby reduce the amount of data sent to the server. The number of stages is selectable by the MS, and is sent as side information to the server so that it knows where to continue the feature extraction. The computational load in extracting features form a media sample is therefore distributed among the MS and the server (or at least reduced at the server, as the MS may perform all feature extraction in certain instances and the server merely match the already-extracted features to its database). Preferably, this distribution of feature extraction is adaptively implemented at the MS, such as by using feedback received from the server, measurements of available channel capacity in the link to the network, and/or based on the MS's determination of the type or complexity of the media sample to be identified.

The end user of the MS 26 can both identify and purchase the music he/she is hearing on the go. The user does not loose the linkage between recognized song information and the point where the actual song file can be purchased. Performing the part of signal analysis (feature extraction) in the MS reduces the amount of data sent (OTA) to the server, and thereby the transmission cost involved. While there has been illustrated and described what is at present considered to be a preferred embodiment of the claimed invention, it will be appreciated that numerous changes and modifications are likely to occur to those skilled in the art.

## Claims

1. A mobile station MS (26) comprising:
an interface (48, 70) configured to receive a audio or text sample (24);
a processor (50) configured to extract in response to a user input a first set of features from a digital version of the audio or text sample (24);
a transmitter (60) configured to transmit the extracted first set of features over a wireless communication link (28); **characterized by**:
a receiver (62) configured to receive a request message that requests at least one additional feature over the wireless link (28);
wherein the processor (50) is automatically responsive to the request message to extract a second set of features from the digital version of the audio or text sample (24) consistent with the at least one additional feature requested in the request message and the transmitter (60) being configured to transmit the extracted second set.

2. The mobile station (26) of claim 1 wherein the interface (48, 70) comprises a transducer.

3. The mobile station (26) of claim 2 wherein the transducer comprises a microphone (48) and the audio or text sample (24) comprises an audio sample.

4. The mobile station (26) of claim 2 wherein the transducer comprises a camera (70) and the audio or text sample (24) comprises a visual sample,

5. The mobile station (26) of claim 1 wherein the interface (48, 70) comprises one of a cable and a wireless link.

6. The mobile station (26) of claim 5 wherein the audio or text sample (24) that the interface (48, 70) is configured to receive is the digital version.

7. The mobile station (26) of claim 1 wherein said transmitter (60) is further configured to transmit a message that includes the at least one extracted feature and no portion of the digital version of the audio or text sample (24).

8. The mobile station (26) of claim 1 wherein the processor (50) is further configured to adaptively select a number of features to extract based on the digital version of the audio or text sample (24).

9. The mobile station (26) of claim 1 wherein the processor (50) is further configured to adaptively select at least one type of feature to extract based on the digital version of the audio or text sample (24), the processor (50) extracts the at least one additional feature of the adaptively selected type, and wherein the transmitter (60) is further configured to transmit an identifier of the selected type of feature.

10. The mobile station (26) of claim 1 further comprising a user interface (58) for causing the transmitter (60) to transmit the first set of features, and a buffer (52) configured to store at least a portion of the digital version of the audio or text sample (24) prior to a user input at the said user interface (58).

11. The mobile station (26) of claim 1 further comprising a user interface (58) by which a single user input initiates: the processor (50) to extract the first set of features, a wireless communications link (28) to be established between the MS (26) and a communication service, and the extracted first set of features to be transmitted over the wireless communications link (28).

12. The mobile station (26) of claim 11 wherein the single user input further initiates a buffer (52) disposed between the transducer (48) and the processor (50) to begin storing at least a portion of the digital version of the audio or text sample (24).

13. The mobile station (26) of claim 1 wherein the processor (50) is configured to extract the first and second sets of features, where the features comprise MPEG-7 descriptors from the digital version of the audio or text sample (24).

14. The mobile station (26) of claim 1 wherein the first set of features is non-reconstructive of the digital version of the audio or text sample (24).

15. The mobile station (26) of claim 1 wherein all extracted features for which the transmitter (60) is to transmit are non-reconstructive of the digital version of the audio or text sample (24).

16. The mobile station (26) of claim 1, wherein the request message specifically identifies each additional feature at least by type, and the second set of features comprises only features of the said identified type.

17. The mobile station (26) of claim 1 wherein at least one feature of the first set of features defines a timepoint within the digital version of the audio or text sample (24), the processor (50) being configured to extract a plurality of n timepoints from the digital version of the audio or text sample (24), and the transmitter (60) is to transmit at least n spectral slices of the digital version of the audio or text sample (24) and an identifier that links each spectral slice to at least one timepoint.

18. The mobile station (26) of claim 17 wherein each (n+1) spectral slice corresponds to a larger portion of the digital version of the audio or text sample (24) than a preceding n^{th} slice.

19. The mobile station (26) of claim 17 further comprising a receiver (62) for receiving a sample identification message, and the processor (50) is further to terminate transmitting further timepoints and spectral slices in response to receipt of the sample identification message.

20. A computer program, embodied on a computer readable medium within a mobile station (26), to process a audio or text sample (24) comprising:
a first set of computer instructions configured to extract in response to a user input a first set of features from a digital audio or text sample (24) and to transmit the first set of features;
**characterized by**:
the first set of computer instructions further configured to extract in response to a received response message resulting from the transmission of the first set of features a second set of features consistent with at least one additional feature requested in the request message; and
a second set of computer instructions to transmit in separate messages the first and second sets of extracted features over a wireless communications link (28).

21. The computer program of claim 20 wherein the second set of computer instructions is further configured to transmit a message carrying the at least one extracted feature and no portion of the digital audio or text sample (24).

22. The computer program of claim 20 wherein the first set of computer instructions is further configured to adaptively select a number of features to extract based on the digital audio or text sample (24), and extracting the selected number.

23. The computer program of claim 20 wherein
the first set of computer instructions is configured to adaptively select a type of feature to extract based on the digital audio or text sample (24) and to extract at least one feature of the adaptively selected type, and
the second set of computer instructions is configured to transmit the at least one extracted feature and an identifier of the selected type of feature.

24. The computer program of claim 20 wherein the at least one feature defines a timepoint, the first set of computer instructions is configured to extract a plurality of n timepoints from the digital audio or text sample (24), and the second set of computer instructions is to transmit at least n spectral slices of the digital audio or text sample (24) and an identifier that links each spectral slice to a timepoint.

25. The computer program of claim 20 wherein the first set of computer instructions is configured to extract at least one feature from a digital audio or text sample (24) that is non-reconstructive of that digital audio or text sample (24).

26. A computer program embodied on a computer readable medium to uniquely match a plurality of extracted features to a feature set stored in a database (40) comprising:
a first set of computer instructions to receive over a network (32) a first and a second message that includes first and second sets of received features, respectively; a second set of computer instructions to search a database of feature sets for all matching sets that match the first set of received features and to determine a second set of at least one additional feature that distinguishes among each of the matching sets;
a third set of computer instructions to transmit over the network a request message that stipulates the second set of additional features; and
a fourth set of computer instructions to uniquely identify one feature set from among the matching sets using the second set of received features.

27. The computer program of claim 26 wherein each feature set is associated with a audio or text file title, the computer program further comprising a fifth set of computer instructions to transmit, over the network to a sender of the message, a reply that includes the audio or text file title.

28. The computer program of claim 26 wherein the request message includes at least one of a number and a type of the further features.

29. A method comprising:
at a portable wireless device (26), receiving (302) a audio or text sample (24);
at the portable wireless device (26), extracting (308) in response to a user input, a first set of features from a digital version of the audio or text sample (24);
transmitting (312) from the portable wireless device (26) a message that includes the extracted first set of features and that excludes the digital version of the audio or text sample (24); **characterized by**:
at the portable wireless device (26), receiving a message requesting additional features;
at the portable wireless device (26), extracting a second set of features from the digital version of the audio or text sample (24) consistent with the message requesting additional features; and
at the portable wireless device (26), transmitting (312) the extracted second set of features.

## Patentansprüche

1. Eine Mobilstation MS (26), umfassend:
eine Schnittstelle (48, 70), die eingerichtet ist, um eine Audio- oder Textprobe (24) zu empfangen;
ein Prozessor (50), der eingerichtet ist, in Antwort auf eine Benutzereingabe einen ersten Satz von Merkmalen aus einer digitalen Version der Audio- oder Textprobe (24) zu extrahieren;
einen Sender (60), der eingerichtet ist, um den extrahierten ersten Satz von Merkmalen über eine drahtlose Kommunikationsverbindung (28) zu senden;
**gekennzeichnet durch**:
einen Empfänger (62), der eingerichtet ist, eine Anforderungsnachricht, die mindestens ein zusätzliches Merkmal anfordert, über die drahtlose Verbindung (28) zu empfangen;
wobei der Prozessor (50) automatisch auf die Anforderungsnachricht reagiert, um einen zweiten Satz von Merkmalen aus der digitalen Version der Audio- oder Textprobe (24) zu extrahieren, der mit dem mindestens einen zusätzlichen Merkmal konsistent ist, das in der Anforderungsnachricht angefordert wird, und wobei der Sender (60) eingerichtet ist, den extrahierten zweiten Satz zu senden.

2. Die Mobilstation (26) nach Anspruch 1, wobei die Schnittstelle (48, 70) einen Wandler umfasst.

3. Die Mobilstation (26) nach Anspruch 2, wobei der Wandler ein Mikrofon (48) umfasst und die Audio- oder Textprobe (24) eine Audioprobe umfasst.

4. Die Mobilstation (26) nach Anspruch 2, wobei der Wandler eine Kamera (70) umfasst und die Audio- oder Textprobe (24) eine visuelle Probe umfasst.

5. Die Mobilstation (26) nach Anspruch 1, wobei die Schnittstelle (48, 70) eine von einer Kabel- und einer drahtlosen Verbindung umfasst.

6. Die Mobilstation (26) nach Anspruch 5, wobei die Audio- und Textprobe (24), für die die Schnittstelle zu empfangen eingerichtet ist, die digitale Version ist.

7. Die Mobilstation (26) nach Anspruch 1, wobei der Sender (60) ferner eingerichtet ist, eine Nachricht zu senden, die das mindestens eine extrahierte Merkmal und keinen Teil der digitalen Version der Audio- oder Textprobe (24) einschließt.

8. Die Mobilstation (26) nach Anspruch 1, wobei der Prozessor (50) ferner eingerichtet ist, eine Anzahl von Merkmalen adaptiv auszuwählen, um basierend auf der digitalen Version der Audio- oder Textprobe (24) zu extrahieren.

9. Die Mobilstation (26) nach Anspruch 1, wobei der Prozessor (50) ferner eingerichtet ist, mindestens einen Typ von Merkmal adaptiv auszuwählen, um basierend auf der digitalen Version der Audio- oder Textprobe (24) zu extrahieren, der Prozessor (50) das mindestens eine zusätzliche Merkmal des adaptiv ausgewählten Typs extrahiert, und wobei der Sender (60) ferner eingerichtet ist, eine Kennung des ausgewählten Typs von Merkmal zu senden.

10. Die Mobilstation (26) nach Anspruch 1, die ferner eine Benutzerschnittstelle (58), um den Sender (60) zu veranlassen, den ersten Satz von Merkmalen zu senden, und einen Puffer (52) umfasst, der eingerichtet ist, mindestens einen Teil der digitalen Version der Audio- und Textprobe (24) vor einer Benutzereingabe an der Benutzerschnittstelle (58) zu speichern.

11. Die Mobilstation (26) nach Anspruch 1, die ferner eine Benutzerschnittstelle (58) umfasst, durch die eine einzelne Benutzereingabe veranlasst: den Prozessor (50), den ersten Satz von Merkmalen zu extrahieren, eine drahtlose Kommunikationsverbindung (28), zwischen der MS (26) und einem Kommunikationsdienst aufgebaut zu werden, und den extrahierten ersten Satz von Merkmalen, über die drahtlose Kommunikationsverbindung (28) gesendet zu werden.

12. Die Mobilstation (26) nach Anspruch 11, wobei die einzelne Benutzereingabe ferner einen Puffer (52), der zwischen dem Wandler (48) und dem Prozessor (50) angeordnet ist, veranlasst, mit Speichern mindestens eines Teils der digitalen Version der Audio-und Textprobe (24) zu beginnen.

13. Die Mobilstation (26) nach Anspruch 1, wobei der Prozessor (50) eingerichtet ist, den ersten und zweiten Satz von Merkmalen zu extrahieren, wobei die Merkmale MPEG-7 Deskriptoren aus der digitalen Version der Audio- und Textprobe (24) umfassen.

14. Die Mobilstation (26) nach Anspruch 1, wobei der erste Satz von Merkmalen nicht-rekonstruktiv für die digitale Version der Audio- und Textprobe (24) ist.

15. Die Mobilstation (26) nach Anspruch 1, wobei alle extrahierte Merkmale, für die dem der Sender (60) zu senden vorgesehen ist, nicht- rekonstruktiv für die digitale Version der Audio- und Textprobe (24) sind.

16. Die Mobilstation (26) nach Anspruch 1, wobei die Anforderungsnachricht jedes zusätzliche Merkmal mindestens durch einen Typ spezifisch identifiziert und der zweite Satz nur Merkmale des identifizierten Typs umfasst.

17. Die Mobilstation (26) nach Anspruch 1, wobei mindestens ein Merkmal des ersten Satzes von Merkmalen einen Zeitpunkt innerhalb der digitalen Version der Audio-und Textprobe (24) festlegt, wobei der Prozessor (50) eingerichtet ist, eine Vielzahl von n Zeitpunkten aus der digitalen Version der Audio- und Textprobe (24) zu extrahieren, und der Sender (60) vorgesehen ist, mindestens n spektrale Anteile der digitalen Version der Audio- und Textprobe (24) und eine Kennung, die jeden spektralen Anteil mit mindestens einem Zeitpunkt verknüpft, zu senden.

18. Die Mobilstation (26) nach Anspruch 17, wobei jeder (n+1) spektrale Anteil einem größeren Teil der digitalen Version der Audio- und Textprobe (24) als ein vorhergehender n-ter Anteil entspricht.

19. Die Mobilstation (26) nach Anspruch 17, die ferner einen Empfänger (62) zum Empfangen einer Probeidentifikationsnachricht umfasst und der Prozessor (50) ferner vorgesehen ist, ein Senden von weiteren Zeitpunkten und spektralen Anteilen in Antwort auf ein Empfang der Probeidentifikationsnachricht zu beenden.

20. Ein Computerprogramm, das auf einem computerlesbaren Medium in einer Mobilstation (26) verkörpert ist, um eine Audio- oder Textprobe (24) zu verarbeiten, umfassend:
einen ersten Satz von Computeranweisungen, der eingerichtet ist, in Antwort auf eine Benutzereingabe einen ersten Satz von Merkmalen aus eine digitalen Audio-oder Textprobe (24) zu extrahieren und den ersten Satz von Merkmalen zu senden;
**gekennzeichnet durch**
den ersten Satz von Computeranweisungen, der ferner eingerichtet ist, in Antwort auf eine empfangene Antwortnachricht, die aus dem Senden des ersten Satzes von Merkmalen folgt, einen zweiten Satz von Merkmalen zu extrahieren, der mit mindestens einem zusätzlichen Merkmal konsistent ist, das in der Anforderungsnachricht angefordert wird; und
einen zweiten Satz von Computeranweisungen, um in separaten Nachrichten den ersten und zweiten Satz von extrahierten Merkmalen über die drahtlose Kommunikationsverbindung (28) zu senden.

21. Das Computerprogramm nach Anspruch 20, wobei der zweite Satz von Computeranweisungen ferner eingerichtet ist, eine Nachricht zu senden, die das mindestens eine extrahierte Merkmal und keinen Teil der digitalen Audio- und Textprobe (24) trägt.

22. Das Computerprogramm nach Anspruch 20, wobei der erste Satz von Computeranweisungen ferner eingerichtet ist, eine Anzahl von Merkmalen adaptiv auszuwählen, um basierend auf der digitalen Audio- und Textprobe (24) zu extrahieren, und wobei die ausgewählte Anzahl extrahiert wird.

23. Das Computerprogramm nach Anspruch 20, wobei
der erste Satz von Computeranweisungen eingerichtet ist, einen Typ von Merkmal adaptiv auszuwählen, um basierend auf der digitalen Audio- und Textprobe (24) zu extrahieren und um mindestens ein Merkmal des adaptiv ausgewählten Typs zu extrahieren, und
der zweite Satz von Computeranweisungen eingerichtet ist, das mindestens eine extrahierte Merkmal und eine Kennung des ausgewählten Typs von Merkmal zu senden.

24. Das Computerprogramm nach Anspruch 20, wobei das mindestens eine Merkmal eine Zeitpunkt festlegt, der erste Satz von Computeranweisungen eingerichtet ist, eine Vielzahl von n Zeitpunkten aus der digitalen Audio- und Textprobe (24) zu extrahieren, und der zweite Satz von Computeranweisungen vorgesehen ist, mindestens n spektrale Anteile der digitalen Audio- und Textprobe (24) und eine Kennung, die jeden spektralen Anteil mit einem Zeitpunkt verknüpft, zu senden.

25. Das Computerprogramm nach Anspruch 20, wobei der erste Satz von Computeranweisungen eingerichtet ist, mindestens ein Merkmal aus der digitalen Audio- und Textprobe (24) zu extrahieren, die nicht-rekonstruktiv für diese digitale Audio- und Textprobe (24) ist.

26. Ein Computerprogramm, das auf einem computerlesbaren Medium verkörpert ist, um mit eines Vielzahl von extrahierten Merkmalen mit einem Merkmalssatz eindeutig abzugleichen, der in einem Datenbestand (40) gespeichert ist, umfassend:
einen ersten Satz von Computeranweisungen, um über ein Netzwerk (32) eine erste und eine zweite Nachricht zu empfangen, die einen ersten bzw. zweiten Satz von empfangenen Merkmalen einschließt; einen zweiten Satz von Computeranweisungen, um einen Datenbestand von Merkmalssätzen nach allen übereinstimmenden Sätzen zu durchsuchen, die mit dem ersten Satz von empfangenen Merkmalen übereinstimmen, und um einen zweiten Satz von mindestens einem zusätzlichen Merkmal zu bestimmen, der jeden der übereinstimmenden Sätze voreinander unterscheidet;
einen dritten Satz von Computeranweisungen, um über das Netzwerk eine Anforderungsnachricht zu senden, die den zweiten Satz von zusätzlichen Merkmalen fordert;
einen vierten Satz von Computeranweisungen, um einen Merkmalsatz aus den übereinstimmenden Sätzen unter Verwendung des zweiten Satzes von empfangenen Merkmalen eindeutig zu identifizieren.

27. Das Computerprogramm nach Anspruch 26, wobei jeder Merkmalsatz einem Audio-oder Textdateititel zugeordnet ist, wobei das Computerprogramm ferner einen fünften Satz von Computeranweisungen umfasst, um über das Netzwerk an den Sender der Nachricht eine Antwort zu senden, das den Audio- oder Textdateititel einschließt.

28. Das Computerprogramm nach Anspruch 26, wobei die Anforderungsnachricht mindestens einen einer Anzahl und eines Typs der weiteren Merkmale einschließt.

29. Ein Verfahren, umfassend:
Empfangen (302) einer Audio- oder Textprobe (24) an einer portablen, drahtlosen Vorrichtung (26);
Extrahieren (308) in Antwort auf eine Benutzereingabe eines ersten Satzes von Merkmalen aus einer digitalen Version der Audio- oder Textprobe (24) an der portablen, drahtlosen Vorrichtung (26);
Senden (312) von der portablen, drahtlosen Vorrichtung (26) einer Nachricht, die den extrahierten ersten Satz von Merkmalen umfasst und die digitale Version der Audio- oder Textprobe (24) ausschließt; **gekennzeichnet durch**:
Empfangen einer Nachricht, die zusätzliche Merkmale anfordert, an der portablen, drahtlosen Vorrichtung (26);
Extrahieren eines zweiten Satzes von Merkmalen aus der digitalen Version der Audio- oder Textprobe (24), der mit der Nachricht konsistent ist, die zusätzliche Merkmale anfordert, an der portablen, drahtlosen Vorrichtung (26); und
Senden (312) des extrahierten zweiten Satzes von Merkmalen an der portablen, drahtlosen Vorrichtung (26).

## Revendications

1. Station mobile MS (26) comprenant :
une interface (48, 70) configurée pour recevoir un échantillon audio ou texte (24) ;
un processeur (50) configuré pour extraire en réponse à une entrée d'utilisateur un premier ensemble de caractéristiques d'une version numérique de l'échantillon audio ou texte (24) ;
un émetteur (60) configuré pour transmettre le premier ensemble extrait de caractéristiques sur une liaison de communication sans fil (28) ; **caractérisée par** :
un récepteur (62) configuré pour recevoir un message de demande qui demande au moins une caractéristique supplémentaire sur la liaison sans fil (28) ;
dans lequel le processeur (50) répond automatiquement au message de demande pour extraire un deuxième ensemble de caractéristiques de la version numérique de l'échantillon audio ou texte (24) cohérent avec l'au moins une caractéristique supplémentaire demandée dans le message de demande et l'émetteur (60) étant configuré pour transmettre le deuxième ensemble extrait.

2. Station mobile (26) selon la revendication 1, dans laquelle l'interface (48, 70) comprend un transducteur.

3. Station mobile (26) selon la revendication 2, dans laquelle le transducteur comprend un microphone (48) et l'échantillon audio ou texte (24) comprend un échantillon audio.

4. Station mobile (26) selon la revendication 2, dans laquelle le transducteur comprend une caméra (70) et l'échantillon audio ou texte (24) comprend un échantillon visuel.

5. Station mobile (26) selon la revendication 1, dans laquelle l'interface (48, 70) comprend un câble ou une liaison sans fil.

6. Station mobile (26) selon la revendication 5, dans laquelle l'échantillon audio ou texte (24) que l'interface (48, 70) est configurée pour recevoir est la version numérique.

7. Station mobile (26) selon la revendication 1, dans laquelle ledit émetteur (60) est en outre configuré pour transmettre un message qui comprend l'au moins une caractéristique extraite et aucune partie de la version numérique de l'échantillon audio ou texte (24).

8. Station mobile (26) selon la revendication 1, dans laquelle le processeur (50) est en outre configuré pour sélectionner de manière adaptative un certain nombre de caractéristiques à extraire sur la base de la version numérique de l'échantillon audio ou texte (24).

9. Station mobile (26) selon la revendication 1, dans laquelle le processeur (50) est en outre configuré pour sélectionner de manière adaptative au moins un type de caractéristique à extraire sur la base de la version numérique de l'échantillon audio ou texte (24), le processeur (50) extrait l'au moins une caractéristique supplémentaire du type sélectionné de manière adaptative, et dans laquelle l'émetteur (60) est en outre configuré pour transmettre un identifiant du type sélectionné de caractéristique.

10. Station mobile (26) selon la revendication 1, comprenant en outre une interface utilisateur (58) pour amener l'émetteur (60) à transmettre le premier ensemble de caractéristiques, et un tampon (52) configuré pour stocker au moins une partie de la version numérique de l'échantillon audio ou texte (24) avant une entrée d'utilisateur à ladite interface utilisateur (58).

11. Station mobile (26) selon la revendication 1, comprenant en outre une interface utilisateur (58) par laquelle une entrée d'utilisateur unique amène : le processeur (50) à extraire le premier ensemble de caractéristiques, une liaison de communication sans fil (28) à être établie entre la MS (26) et un service de communication, et le premier ensemble extrait de caractéristiques à être transmis sur la liaison de communication sans fil (28).

12. Station mobile (26) selon la revendication 11, dans laquelle l'entrée d'utilisateur unique amène en outre un tampon (52) disposé entre le transducteur (48) et le processeur (50) à commencer à stocker au moins une partie de la version numérique de l'échantillon audio ou texte (24).

13. Station mobile (26) selon la revendication 1, dans laquelle le processeur (50) est configuré pour extraire les premier et deuxième ensembles de caractéristiques, où les caractéristiques comprennent des descripteurs MPEG-7 de la version numérique de l'échantillon audio ou texte (24).

14. Station mobile (26) selon la revendication 1, dans laquelle le premier ensemble de caractéristiques est non reconstructif de la version numérique de l'échantillon audio ou texte (24).

15. Station mobile (26) selon la revendication 1, dans laquelle toutes les caractéristiques extraites que l'émetteur (60) doit transmettre sont non reconstructives de la version numérique de l'échantillon audio ou texte (24).

16. Station mobile (26) selon la revendication 1, dans laquelle le message de demande identifie spécifiquement chaque caractéristique supplémentaire au moins par type, et le deuxième ensemble de caractéristiques comprend uniquement des caractéristiques dudit type identifié.

17. Station mobile (26) selon la revendication 1, dans laquelle au moins une caractéristique du premier ensemble de caractéristiques définit un point de temps à l'intérieur de la version numérique de l'échantillon audio ou texte (24), le processeur (50) étant configuré pour extraire une pluralité de n points de temps de la version numérique de l'échantillon audio ou texte (24), et l'émetteur (60) est destiné à transmettre au moins n tranches spectrales de la version numérique de l'échantillon audio ou texte (24) et un identifiant qui lie chaque tranche spectrale à au moins un point de temps.

18. Station mobile (26) selon la revendication 17, dans laquelle chaque (n+1) tranche spectrale correspond à une partie de la version numérique de l'échantillon audio ou texte (24) plus grande qu'une n^{ième} tranche précédente.

19. Station mobile (26) selon la revendication 17, comprenant en outre un récepteur (62) pour recevoir un message d'identification d'échantillon, et le processeur (50) est en outre destiné à terminer la transmission d'autres points de temps et d'autres tranches spectrales en réponse à la réception du message d'identification d'échantillon.

20. Programme informatique, réalisé sur un support lisible par ordinateur à l'intérieur d'une station mobile (26), pour traiter un échantillon audio ou texte (24) comprenant :
un premier ensemble d'instructions d'ordinateur configuré pour extraire en réponse à une entrée d'utilisateur un premier ensemble de caractéristiques d'un échantillon audio ou texte numérique (24) et pour transmettre le premier ensemble de caractéristiques ;
**caractérisé par** :
le premier ensemble d'instructions d'ordinateur est en outre configuré pour extraire en réponse à un message de réponse reçu résultant de la transmission du premier ensemble de caractéristiques un deuxième ensemble de caractéristiques cohérent avec l'au moins une caractéristique supplémentaire demandée dans le message de demande ; et
un deuxième ensemble d'instructions d'ordinateur pour transmettre dans des messages distincts les premier et deuxième ensembles de caractéristiques extraites sur une liaison de communication sans fil (28).

21. Programme informatique selon la revendication 20, dans lequel le deuxième ensemble d'instructions d'ordinateur est en outre configuré pour transmettre un message portant l'au moins une caractéristique extraite et aucune partie de l'échantillon audio ou texte numérique (24).

22. Programme informatique selon la revendication 20, dans lequel le premier ensemble d'instructions d'ordinateur est en outre configuré pour sélectionner de manière adaptative un certain nombre de caractéristiques à extraire sur la base de l'échantillon audio ou texte numérique (24), et extraire le nombre sélectionné.

23. Programme informatique selon la revendication 20, dans lequel
le premier ensemble d'instructions d'ordinateur est configuré pour sélectionner de manière adaptative un type de caractéristique à extraire sur la base de l'échantillon audio ou texte numérique (24) et extraire au moins une caractéristique du type sélectionné de manière adaptative, et
le deuxième ensemble d'instructions d'ordinateur est configuré pour l'au moins une caractéristique extraite et un identifiant du type sélectionné de caractéristique.

24. Programme informatique selon la revendication 20, dans lequel l'au moins une caractéristique définit un point de temps, le premier ensemble d'instructions d'ordinateur est configuré pour extraire une pluralité de n points de temps de l'échantillon audio ou texte numérique (24), et le deuxième ensemble d'instructions d'ordinateur est destiné à transmettre au moins n tranches spectrales de l'échantillon audio ou texte numérique (24) et un identifiant qui lie chaque tranche spectrale à au moins un point de temps.

25. Programme informatique selon la revendication 20, dans lequel le premier ensemble d'instructions d'ordinateur est configuré pour extraire au moins une caractéristique d'un échantillon audio ou texte numérique (24) qui est non reconstructif de cet échantillon audio ou texte numérique (24).

26. Programme informatique réalisé sur un support lisible par ordinateur pour accorder de manière unique une pluralité de caractéristiques extraites à un ensemble de caractéristiques stocké dans une base de données (40) comprenant :
un premier ensemble d'instructions d'ordinateur pour recevoir sur un réseau (32) un premier message et un deuxième message comprenant respectivement un premier ensemble et un deuxième ensemble de caractéristiques reçues ; un deuxième ensemble d'instructions d'ordinateur pour rechercher dans une base de données d'ensembles de caractéristiques tous les ensembles s'accordant qui s'accordent au premier ensemble de caractéristiques reçues et pour déterminer un deuxième ensemble d'au moins une caractéristique supplémentaire qui se distingue parmi chacun des ensembles s'accordant ;
un troisième ensemble d'instructions d'ordinateur pour transmettre sur le réseau un message de demande qui stipule le deuxième ensemble de caractéristiques supplémentaires ; et
un quatrième ensemble d'instructions d'ordinateur pour identifier de manière unique un ensemble de caractéristiques parmi les ensembles s'accordant en utilisant le deuxième ensemble de caractéristiques reçues.

27. Programme informatique selon la revendication 26, dans lequel chaque ensemble de caractéristiques est associé à un titre de fichier audio ou texte, le programme informatique comprenant en outre un cinquième ensemble d'instructions d'ordinateur pour transmettre, sur le réseau à un expéditeur du message, une réponse qui comprend le titre de fichier audio ou texte.

28. Programme informatique selon la revendication 26, dans lequel le message de demande comprend au moins un nombre ou un type des caractéristiques supplémentaires.

29. Procédé comprenant les étapes consistant à :
au niveau d'un dispositif sans fil portable (26), recevoir (302) un échantillon audio ou texte (24) ;
au niveau du dispositif sans fil portable (26), extraire (308) en réponse à une entrée d'utilisateur, un premier ensemble de caractéristiques d'une version numérique de l'échantillon audio ou texte (24) ;
transmettre (312) du dispositif sans fil portable (26) un message qui comprend le premier ensemble extrait de caractéristiques et qui exclut la version numérique de l'échantillon audio ou texte (24) ;
**caractérisé par** les étapes consistant à :
au niveau du dispositif sans fil portable (26), recevoir un message demandant des caractéristiques supplémentaires ;
au niveau du dispositif sans fil portable (26), extraire un deuxième ensemble de caractéristiques de la version numérique de l'échantillon audio ou texte (24) cohérent avec le message demandant des caractéristiques supplémentaires ; et
au niveau du dispositif sans fil portable (26), transmettre (312) le deuxième ensemble extrait de caractéristiques.
